# EUROPEAN PATENT APPLICATION

(11) **EP 1 511 155 A1**
(43) Date of publication of application: **02.03.2005**
(21) Application number: 04019565.3
(22) Date of filing: 18.08.2004
(51) Int. Cl.: H02K 3/28, B62D 5/04

(54) **Electric motor and steering system using the same**

(30) Priority: 25.08.2003 JP 2003300229
(71) Applicant: Favess Co. Ltd., Okazaki-shi Aichi-ken (JP); Toyoda Koki Kabushiki Kaisha, Kariya-shi, Aichi-ken (JP); Koyo Seiko Co., Ltd., Osaka (JP)
(72) Inventor: Nakamura, Ryuichi, Okazaki-shi Aichi-ken (JP)
(74) Representative: Leson, Thomas Johannes Alois, Dipl.-Ing.

(57) **Abstract**

An electric motor is disclosed wherein a positive magnetic pole winding and a negative magnetic winding for each of plural phases in each of two systems are wound respectively around two teeth adjoining each other of those teeth which are arranged circumferentially on an internal surface of a stator to protrude radially inwardly. Thus, in either one of the case that the rotor is rotated by the excitation of all the windings in both of the two systems and the case that it is rotated by the excitation of the windings in either one of the two systems, the windings adjoining each other serve as a set and magnetically attract the rotor thereby to rotate the same. In either case, the position sensor is able to precisely detect the position of the rotor relative to the windings. As a result, the torque ripple which occurs when the rotor is switched from being rotated by the excitation of the windings in the two systems to being rotated by the excitation of the windings in either one system only can be suppressed, so that the electric motor can be driven smoothly.

## Description

### INCORPORATION BY REFERENCE

This application is based on and claims priority under 35 U.S.C. 119 with respect to Japanese Application No. 2003-300229 filed on August 25, 2003, the entire content of which is incorporated herein by reference.

### BACKGROUND OF THE INVENTION

### Field of the Invention:

The present invention relates to an electric motor and a steering system using the same for use typically in a motor vehicle.

### Discussion of the Related Art:

As a steering system in recent years, there has been developed a so-called "steer-by-wire system" of the type that the angular orientation of steerable road wheels which are mechanically disconnected from a steering in a motor vehicle is controlled by an actuator in dependence on the steering angle of the steering.

Of steering systems of this kind, one having two actuators is known to be of the construction wherein a fail-safe capability is provided to cope with an abnormality occurring in the actuator, as described in Japanese unexamined, published patent application No. 2002-37112.

However, in the foregoing prior art steering system, a problem arises in that the provision of the two actuators undesirably causes the manufacturing cost to rise and the steering system to be enlarged in the entire construction.

### SUMMARY OF THE INVENTION

Accordingly, it is a primary object of the present invention to provide an improved electric motor and a steering system which is provided with a fail-safe capability and is capable of being reduced in cost as well as being diminished in size.

Briefly, according to the present invention, there is provided an electric motor comprising a rotor rotatable on an axis thereof, a stator coaxially receiving the rotor therein and having a plurality of teeth which are arranged circumferentially on an internal surface of the stator to protrude radially inwardly, and windings for two systems wound respectively around the plurality of teeth to be excited by polyphase alternating-current electric currents for the two systems. The windings include a positive magnetic pole winding and a negative magnetic pole winding, opposite in polarity to each other, for each of plural phases in each of the two systems. The electric motor further comprises position sensor means for detecting the rotational position of the rotor relative to the stator, whereby the rotor is rotationally driven by changing the phase of an exciting current which is to be applied to the windings for each phase in each of the two systems, in dependence on a detection signal from the position sensor means.

In the electric motor of the aforementioned construction, the rotor can be rotated usually by the excitation of the windings in both of the two systems, but in the event that either one of the two system gets into trouble, can be rotated by the excitation of the windings in the other system only. Thus, it can be prevented that the electric motor is brought into stop at the same time as either one of the two system gets into trouble, so that a fail-safe capability can be realized by the use of the single electric motor. Moreover, compared with the prior art construction using two electric motors, the construction according to the present invention can be decreased in number of the parts used therein, so that it can be reduced in cost and diminished in size.

### BRIEF DESCRIPTION OF THE ACCOMPANYING DRAWINGS

The foregoing and other objects and many of the attendant advantages of the present invention may readily be appreciated as the same becomes better understood by reference to the preferred embodiments of the present invention when considered in connection with the accompanying drawings, wherein like reference numerals designate the same or corresponding parts throughout several views, and in which:
Figure 1 is a cross-sectional view of an electric motor in a first embodiment according to the present invention;
Figure 2 is a block diagram showing the construction of a steering system in a second embodiment according to the present invention;
Figure 3 is a cross-sectional view of an electric motor incorporated into the steering system in the second embodiment; and
Figure 4 is a cross-sectional view of an electric motor in a modified form.

### DETAILED DESCRIPTION OF THE PREFERRED EMBODIMENTS

### (First Embodiment)

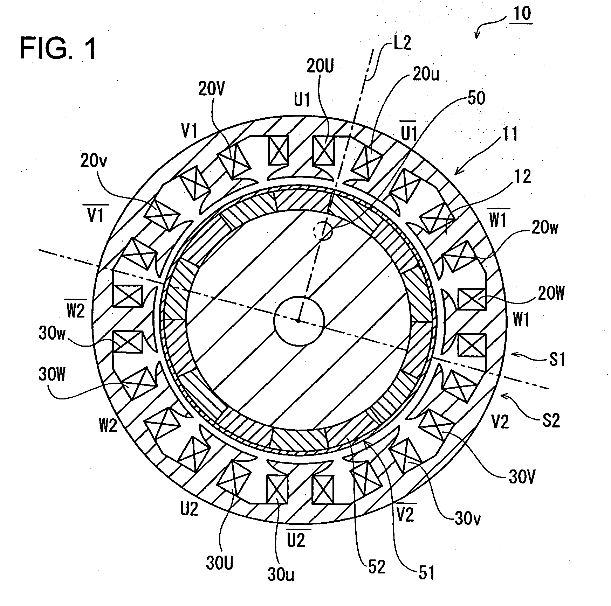

Hereafter, an electric motor in a first embodiment according to the present invention will be described with reference to Figure 1. Figure 1 shows a three-phase alternating-current brushless motor (hereafter referred to simply as "electric motor") 10 as one example of the electric motor according to the present invention. A plurality of permanent magnets 52 are fixedly arranged on a circumferential surface of a rotor 51 provided in the electric motor 10. The permanent magnets 52 takes a configuration of fourteen poles for example, in which N and S poles are arranged in an alternate fashion at fourteen angular positions into which the circumference of the rotor 51 is divided at regular intervals.

A plurality (e.g., twelve) of teeth 12 are circumferentially provided on an internal surface of a stator 11 provided in the electric motor 10 and protrude radially inwardly. An electric wire is wound concentrically around each of these teeth 12, so that windings 20U-20W, 20u-20w, 30U-30W and 30u-30w are provided on the teeth 12 one by one.

These windings are composed of those windings 20U-20W, 20u-20w in a first system which are excited by a first three-phase alternating-current power supply (not shown) and those windings 30U-30W, 30u-30w in a second system which are excited by a second three-phase alternating-current power supply (not shown). The windings for each of the three-phases in each of the two systems make a pair as positive and negative magnetic pole windings (e.g., 20V and 20v), so that the electric motor 10 is provided with, e.g., twelve windings as a whole. In correspondence thereto, twelve teeth 12 are provided respectively at angular positions into which the circumference of the stator 11 is divided by twelve at regular intervals. Further, as shown in Figure 1, the circumferential area of the stator 11 is bisected into two areas S1 and S2, and the positive magnetic pole windings 20U-20W in the first system and the negative magnetic pole windings 20u-20w in the first system are wound respectively around six teeth 12 within one of the areas S1, while the positive magnetic pole windings 30U-30W in the second system and the negative magnetic pole windings 30u-30w in the second system are wound respectively around another six teeth 12 within the other area S2.

More specifically, as shown in Figure 1, in the first system, the negative magnetic pole winding 20v and the positive magnetic pole winding 20V for V-phase, the positive magnetic pole winding 20U and the negative magnetic pole winding 20u for U-phase, and the negative magnetic pole winding 20w and the positive magnetic pole winding 20W for W-phase are arranged in order in a clockwise direction from the leftmost tooth 12 in the area S1. In the second system, on the other hand, the positive magnetic pole winding 30V and the negative magnetic pole winding 30v for V-phase, the negative magnetic pole winding 30u and the positive magnetic pole winding 30U for U-phase, and the positive magnetic pole winding 30W and the negative magnetic pole winding 30w for W-phase are arranged in order in a clockwise direction from the rightmost tooth 12 in the other area S2. In this manner, in the present embodiment, the positive and negative pole windings (eg., 20U and 20u) for each of the three phases in each of the two systems are wound around the two teeth 12, 12 adjoining each other. Further, the negative and positive magnetic pole windings (e.g., 20u and 20U) for each of the three phases are set to be opposite to each other in the winding direction and are connected to each other in series. Therefore, the positive magnetic pole winding and the negative magnetic pole winding for each phase have respective polarities which are inverted with respect to each other.

The stator 11 has secured thereto a position sensor 50 for detecting the rotational position of the rotor 51. The position sensor 50 is constituted by, e.g., an optical element and is arranged to face a rotary slit disc (not shown) rotatable bodily with the rotor 51. More specifically, the position sensor 50 is disposed on a line (indicated at L2 in Figure 1) symmetrically partitioning the teeth 12, 12 around which the positive and negative magnetic pole windings 20U, 20u for U-phase in the first system are wound respectively. Further, plural slits are formed on the rotary slit disc, and count is taken of the number of slits which traverse the position sensor 50 as the rotor 51 is rotated. The origin of the rotor 51 is set as the position where a reference point set on the rotary slit disc faces the position sensor 50, and the rotational angle of the rotor 51 is detected as a rotational angle from the origin.

The operation of the embodiment as constructed above will be described hereinafter. The electric motor 10 in the present embodiment is capable of rotating the rotor 51 usually by the excitation of all the windings 20U-20W, 20u-20w, 30U-30W and 30u-30w in the two systems, but of rotating the rotor 51 by the excitation of the windings, e.g., 20U-20W, 20u-20w (or 30U-30W, 30u-30w) in either one of the two systems in the event that an abnormality occurs in the other system. Thus, the electric motor 10 can be prevented from being brought into stop at the same time as either one of the two systems becomes abnormal, so that a fail-safe capability can be realized by the single motor 10. In comparison with the construction of the foregoing prior art having two electric motors, the construction of the present embodiment is decreased in number of parts used therein and hence, can be reduced in cost and diminished in size.

In addition, the positive magnetic pole winding and the negative magnetic pole winding for each of the three phases in each of the two systems are wound respectively around two teeth 12, 12 adjoining each other. Thus, in either one of the case that the rotor 51 is rotated by the excitation of all the windings 20U-20W, 20u-20w, 30U-30W and 30u-30w in the two systems and the case that it is rotated by the excitation of the windings, e.g., 20U-20W, 20u-20w (or 30U-30W, 30u-30w) in either one system, the windings adjoining each other are excited as a set in the directions opposite to each other in polarity, so thatthe rotor 51 does not change its rotational position relative to the position sensor 50. As a result, the torque ripple which occurs when the rotor 51 is switched from being rotated by the excitation of all the windings 20U-20W, 20u-20w, 30U-30W and 30u-30w in the two systems to being rotated by the excitation of the windings, e.g., 20U-20W, 20u-20w (or 30U-30W, 30u-30w) in either one system only can be suppressed, so that the electric motor 10 can be driven smoothly.

### (Second Embodiment)

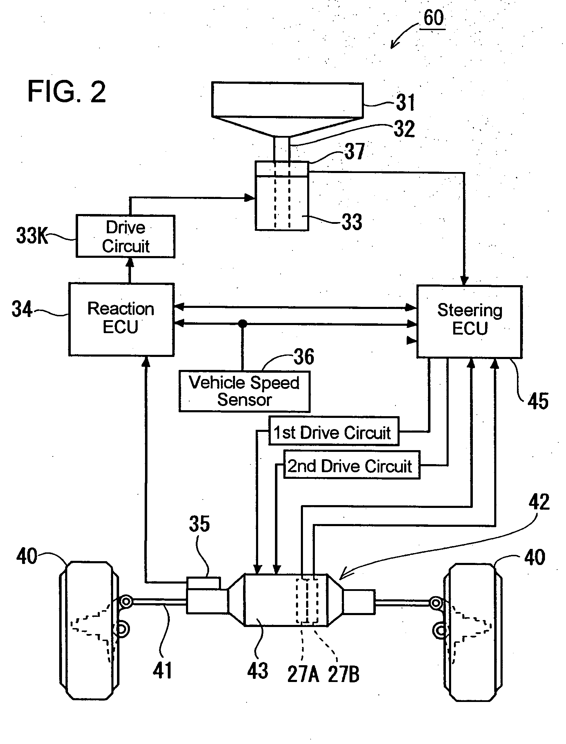

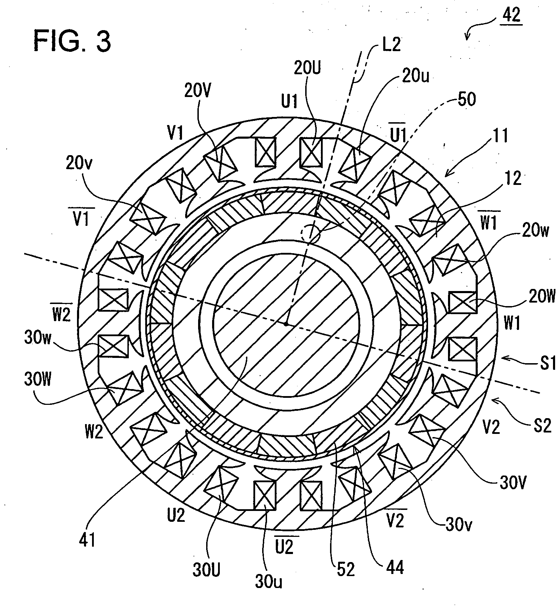

Next, a second embodiment according to the present invention will be described with reference to Figures 2 and 3. Figure 2 shows the entire construction of a steering system 60 according to the present invention. The steering system 60 is a so-called "steer-by-wire system" wherein a steering 31 is mechanically disconnected from steerable road wheels 40, 40. An electric motor 42 according to the present invention is incorporated in the steering system 60 in order to steer the steerable road wheels 40, 40. Hereinafter, description will be made as to only such a construction which is different from the foregoing first embodiment, and the components in the second embodiment which are the same in construction as those in the first embodiment are designated by the same reference numerals in order to avoid the duplicative description thereon.

The steering 31 of the steering system 60 in the present embodiment is fixed to one end of a steering shaft 32 which is rotatably carried in a reaction actuator 33 so that a reaction force is generated when the steering 31 is turned. A reaction ECU (Electronic Control Unit) for controlling the reaction force generated by the reaction actuator 33 has detection signals input,thereto from an axial force sensor 35 and a vehicle speed sensor 36. The axial force sensor 35 detects an axial force exerted on a tie rod 41 extending between the steerable road wheels 40, 40, and the axial force exerted on the tie rod 41 varies in dependence on the state of a road surface on which the motor vehicle is traveling. Thus, the reaction ECU 34 outputs to a drive circuit 33K a control signal depending on the detection signal from the axial sensor 35, so that the steering 31 can be given a reaction force depending on the state of the road surface. Further, the reaction ECU 34 outputs to the drive circuit 33K the control signal also in dependence on the detection signal from the vehicle speed sensor 36, so that the steering 31 is controlled to be heavier during a high-speed traveling and to be lighter during a slow-speed traveling.

Between the reaction actuator 33 and the steering shaft 32, there is attached a steering angle sensor 37 for detecting the steering angle of the steering 31. A steering ECU 45 is further provided, which takes thereinto the detection signal from the steering angle sensor 37. The steering ECU 45 drives the electric motor 42 in dependence on the steering angle of the steering 31, so that the steerable road wheels 40, 40 are steered to an angular orientation corresponding to the steering angle of the steering 31.

On the other hand, a stator 11 of the electric motor 42 is fixedly fit in the interior of a cylindrical housing 43 (shown in Figure 2) surrounding the tie rod 41. As shown in Figure 3, a rotor 44 of the electric motor 42 takes a cylindrical form, and the tie rod 41 passes through the center of the rotor 44. A ball screw mechanism (not shown) is arranged between the portion surrounded by the cylindrical housing 43 of the tie rod 41 and the rotor 44 for converting the rotation of the rotor 44 into a corresponding axial movement of the tie rod 41. Thus, the steerable road wheels 40, 40 are steered by the operation of the electric motor 42.

As described above, with the steering system 60 in the present embodiment, since the angular orientation of the steerable road wheels 40, 40 which are mechanically disconnected from the steering 31 of the motor vehicle is controlled to be positioned by the electric motor 42 according to the present invention, a fail-safe capability can be realized and the steering system 60 can be reduced in cost and diminished in size.

### (Other embodiments or Modifications)

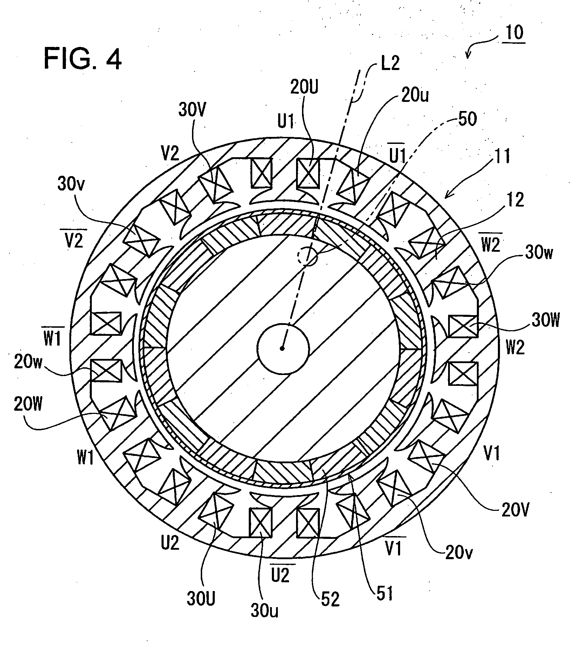

The present invention is not limited to the foregoing embodiments. and encompasses other embodiments, or modifications as exemplified below in the scope of the present invention. Moreover, the present invention may be practiced to be modified variously without departing from the gist thereof.
(1) Although in the foregoing first and second embodiments, the windings 20U-20W, 20u-20w in the first system and the windings 30U-30W, 30u-30w in the second system are sorted to be arranged respectively in the areas S1 and S2 into which the circumferential area of the stator 11 is bisected, those windings in each of the first and second systems may be arranged to be dispersed in both of the areas S1 and S2. Specifically, as shown in Figure 4, with the position sensor 50 taken as reference, those windings may be arranged in a clockwise direction in the order of the negative magnetic pole winding 20u for U-phase in the first system, the negative magnetic pole winding 30w and the positive magnetic pole winding 30W for W-phase in the second system, the positive magnetic pole winding 20V and the negative magnetic pole winding 20v for V-phase in the first system, the negative magnetic pole winding 30u and the positive magnetic pole winding 30U for U-phase in the second system, the positive magnetic pole winding 20W and the negative magnetic pole winding 20w for W-phase in the first system, the negative magnetic pole winding 30v and the positive magnetic pole winding 30V for V-phase in the second system, and the positive magnetic pole winding 20U for U-phase in the first system.
(2) Although each of the electric motors 10, 42 in the first and second foregoing embodiments is provided with one position sensor 50, it may be provided with two position sensors. In this modified case, there may be provided an arrangement that in the event that either one of the position sensors runs into trouble, the windings in each system are excited in dependence on the signal from the other position sensor. With this arrangement, it can be avoided that the electric motor 10 or 42 is brought into stop at the same time as the occurrence of such trouble.

Various features and many of the attendant advantages in the foregoing embodiments will be summarized as follows:

In the electric motor 10 in the first embodiment shown in Figure 1, the rotor 51 can be rotated usually by the excitation of the windings 20U-20W, 20u-20w, 30U-30W, 30u-30w in both of the two systems, but in the event that either one of the two system gets into trouble, can be rotated by the excitation of the windings 20U-20W, 20u-20w (or 30U-30W, 30u-30w) in the other system only. Thus, it can be prevented that the electric motor 10 is brought into stop at the same time as either one of the two system gets into trouble, so that a fail-safe capability can be realized by the single electric motor 10. Moreover, compared with the prior art construction using two electric motors, the construction in the first embodiment can be decreased in number of the parts used therein, so that it can be reduced in cost and diminished in size. Substantially the same function and advantages as those in the first embodiment can be attained in each of the electric motors 42 and 10 in the second and other embodiments respectively shown in Figures 3 and 4.

Also in the electric motor 10 in the first embodiment shown in Figure 1, the positive magnetic pole winding (e.g., 20U) and the negative magnetic pole winding (e.g., 20u) for each phase (e.g., U-phase) in each of the two systems are wound respectively around two adjoining teeth 12, 12 of the plural teeth 12 provided on the stator 51. Thus, in either of the case that the rotor 51 is rotated by the excitation of all the windings 20U-20W, 20u-20w, 30U-30W, 30u-30w in both of the two systems and the case that it is rotated by the excitation of the windings, e.g., 20U-20W, 20u-20w (or 30U-30W, 30u-30w) in either one of the two systems, the windings adjoining each other serve as a set and magnetically attract the rotor 51 thereby to rotate the same. In either case, the position sensor 50 is able to precisely detect the position of the rotor 51 relative to the windings. As a result, the torque ripple which occurs when the rotor 51 is switched from being rotated by the excitation of all windings 20U-20W, 20u-20w, 30U-30W, 30u-30w in the two systems to being rotated by the excitation of the windings 20U-20W, 20u-20w (or 30U-30W, 30u-30w) in either one system only can be suppressed, so that the electric motor 10 can be driven smoothly.

In the electric motor 10 as described as another embodiment or modification, two position sensors are provided. Thus, in the event that either one of the position sensors gets into trouble, the rotational position of the rotor 51 can be detected based on a detection signal from the other position sensor, so that the electric motor 10 can be prevented from being stopped at the same time as the occurrence of such trouble in one position sensor.

In the steering system 60 typically shown in Figure 2, the steerable road wheels 40, 40 are mechanically disconnected from the steering 31, and the angular orientation of the steerable road wheels 40, 40 is controlled by the electric motor 42 of the construction described above. Therefore, a fail-safe capability in the steering system 60 can be realized at a low cost and in a reliable manner.

In particular, in the electric motors 10 or 42 shown in Figures 1 or 3, even in the event that either one of the two systems gets into trouble, the electric motor 10 or 42 is continued to operate with the windings 20U-20W, 20u-20w (or 30U-30W, 30u-30w) in the remaining system excited. Since the windings 20U-20W, 20u-20w (or 30U-30W, 30u-30w) in either system are arranged in a half circumferential area S1 or S2 into which the entire circumferential area of the stator 11 is bisected, the operation of the electric motor 10 or 42 by the windings in either one system only may be reflected to a change in the steering feeling through the reaction actuator 33 by a change in output torque generated by the electric motor 10 or 42. Thus, the driver can feel the operation down of one of the two systems and can be aware of the need for repair.

Obviously, further numerous modifications and variations of the present invention are possible in light of the above teachings. It is therefore to be understood that within the scope of the appended claims, the present invention may be practiced otherwise than as specifically described herein.

An electric motor is disclosed wherein a positive magnetic pole winding and a negative magnetic winding for each of plural phases in each of two systems are wound respectively around two teeth adjoining each other of those teeth which are arranged circumferentially on an internal surface of a stator to protrude radially inwardly. Thus, in either one of the case that the rotor is rotated by the excitation of all the windings in both of the two systems and the case that it is rotated by the excitation of the windings in either one of the two systems, the windings adjoining each other serve as a set and magnetically attract the rotor thereby to rotate the same. In either case, the position sensor is able to precisely detect the position of the rotor relative to the windings. As a result, the torque ripple which occurs when the rotor is switched from being rotated by the excitation of the windings in the two systems to being rotated by the excitation of the windings in either one system only can be suppressed, so that the electric motor can be driven smoothly.

## Claims

1. An electric motor comprising:
a rotor rotatable on an axis thereof;
a stator coaxially receiving said rotor therein and having a plurality of teeth which are arranged circumferentially on an internal surface of said stator to protrude radially inwardly;
windings for two systems wound respectively around said plurality of teeth to be excited by multiphase alternating-current electric currents for said two systems, said windings including a positive magnetic pole winding and a negative magnetic pole winding, opposite in polarity to each other, for each of plural phases in each of said two systems; and
position sensor means for detecting the rotational position of said rotor relative to said stator; _
whereby said rotor is rotationally driven by changing the phase of an exciting current to be applied to each of said windings for each of said plural phases in each of said two systems.

2. The electric motor as set forth in Claim 1, wherein said positive magnetic pole winding and said negative magnetic pole winding for each of said plural phases in each of said two systems are wound respectively around two adjoining teeth of said plurality of teeth provided on said stator.

3. The electric motor as set forth in Claim 2, wherein:
said sensor means comprises two position sensors; and
in the event that either one of said two position sensors gets into trouble, said windings in said two systems are excited based on a position signal from the other position sensor.

4. A steering system wherein a steering of a motor vehicle is mechanically disconnected from steerable road wheels, said steering system including:
an electric motor of the construction defined in Claim 1;
a steering angle sensor for detecting the steering angle of said steering; and
an electronic control unit responsive to the steering angle detected by said steering angle sensor for controlling the operation of said electric motor thereby to control the angular orientation of said steerable road wheels.

5. A steering system wherein a steering of a motor vehicle is mechanically disconnected from steerable road wheels, said steering system including:
an electric motor of the construction defined in Claim 2;
a steering angle sensor for detecting the steering angle of said steering; and
an electronic control unit responsive to the steering angle detected by said steering angle sensor for controlling the operation of said electric motor thereby to control the angular orientation of said steerable road wheels.

6. A steering system wherein a steering of a motor vehicle is mechanically disconnected from steerable road wheels, said steering system including:
an electric motor of the construction defined in Claim 3;
a steering angle sensor for detecting the steering angle of said steering; and
an electronic control unit responsive to the steering angle detected by said steering angle sensor for controlling the operation of said electric motor thereby to control the angular orientation of said steerable road wheels.

7. The electric motor as set forth in Claim 1, wherein said windings in one of said two systems are arranged in a half of the circumferential area around said rotor, while said windings in the other system are arranged in the remaining half of the circumferential area around said rotor.
